# NOUVEAU FASCICULE DE BREVET EUROPEEN

(11) **EP 0 245 199 B2**
(45) Date de publication et mention de la décision concernant l'opposition: **15.06.1994**
(45) Mention de la délivrance du brevet: 17.10.1990
(21) Numéro de dépôt: 87810179.9
(22) Date de dépôt: 30.03.1987
(51) Int. Cl.: G01D 5/24

(54) **Capteur capacitif de position**
Kapazitiver Positionsdetektor
Capacitive position sensor

(30) Priorité: 10.04.1986 CH 1412/86
(43) Date de publication de la demande: 11.11.1987
(73) Titulaire: Meyer, Hans Ulrich, CH-1110 Morges (CH)
(72) Inventeur: Meyer, Hans Ulrich, CH-1110 Morges (CH)
(74) Mandataire: Steen, Dieter Markus

(56) Documents cités:
- DE-A- 2 853 142
- DE-A- 2 940 622
- DE-A- 3 214 794
- DE-A- 3 324 578
- DE-A- 3 340 782
- GB-A- 2 009 944

## Description

L'invention concerne un capteur capacitif de position du type incrémental constitué par une règle comportant une série d'électrodes et par un curseur comportant la partie électronique du capteur ainsi qu'une pluralité d'électrodes, les deux surfaces d'électrodes étant en regard l'une de l'autre. Un capteur de ce genre est décrit par exemple dans la demande de brevet britannique No 2009944 ou encore dans la demande de brevet allemande de 33 24 578-A1.

Pour obtenir une grande finesse dans la mesure de position, il est souhaitable que les électrodes du curseur soient aussi fines que possible, mais on est limité dans ce sens par la difficulté qu'il y a à réaliser les connexions entre lesdites électrodes et les circuits destinés à leur appliquer les potentiels voulus.

L'invention a pour but de simplifier ce problème et de permettre la réalisation d'électrodes d'une grande finesse, de sorte que plus de cent électrodes peuvent être réalisées sur une distance de 1 mm.

L'invention a pour objet un capteur capacitif de la position relative entre deux supports, dont un est déplaçable le long de l'autre, un support comportant une série d'électrodes, le second support comportant une pluralité d'électrodes au nombre supérieur à 4 et une partie électronique permettant d'appliquer des potentiels incrémentaux à ces dernières électrodes, les électrodes d'un support étant en regard de celles de l'autre support, caractérisé en ce qu'au moins une partie des électrodes du second support et au moins une partie de l'électronique se trouvent sur un circuit intégré monolithique commun situé en face des électrodes de l'autre support, la partie de l'électronique se trouvant sur le circuit intégré monolithique étant reliée à chaque électrode se trouvant sur ce circuit intégré monolithique et générant des signaux différents pour chacune de ces électrodes.

Cette disposition contribue, en outre, à l'obtention d'autres avantages, à savoir :
- la précision de la division est très bonne, ce qui permet une bonne linéarité;
- les dimensions du capteur sont extrêmement réduites;
- les interconnexions entre l'électronique et les électrodes, sur un même circuit intégré, ne posent aucun problème : les électrodes peuvent donc être adressées individuellement, permettant ainsi des résolutions très élevées, ce qui élimine la nécessité d'une interpolation;
- la solution est plus économique et plus fiable grâce à la réduction du nombre de connexions externes au circuit intégré.

D'autres avantages découlent encore des particularités faisant l'objet des revendications dépendantes.

Le dessin annexé montre un capteur d'un type connu et, à titre d'exemple, plusieurs formes d'exécution du capteur faisant l'objet de l'invention.
- La figure 1 montre une disposition connue d'électrodes.
- La figure 2 représente la première forme d'exécution qui illustre le principe du capteur faisant l'objet de l'invention. Le circuit intégré 20 est représenté en transparence pour une meilleure clarté.
- La figure 3 montre en coupe une forme d'exécution de l'assemblage d'un capteur.
- La figure 4 montre un arrangement possible des électrodes.
- La figure 5 illustre une autre disposition.
- La figure 6 montre les électrodes de la règle d'un capteur rotatif et leur relation avec les électrodes d'un curseur.

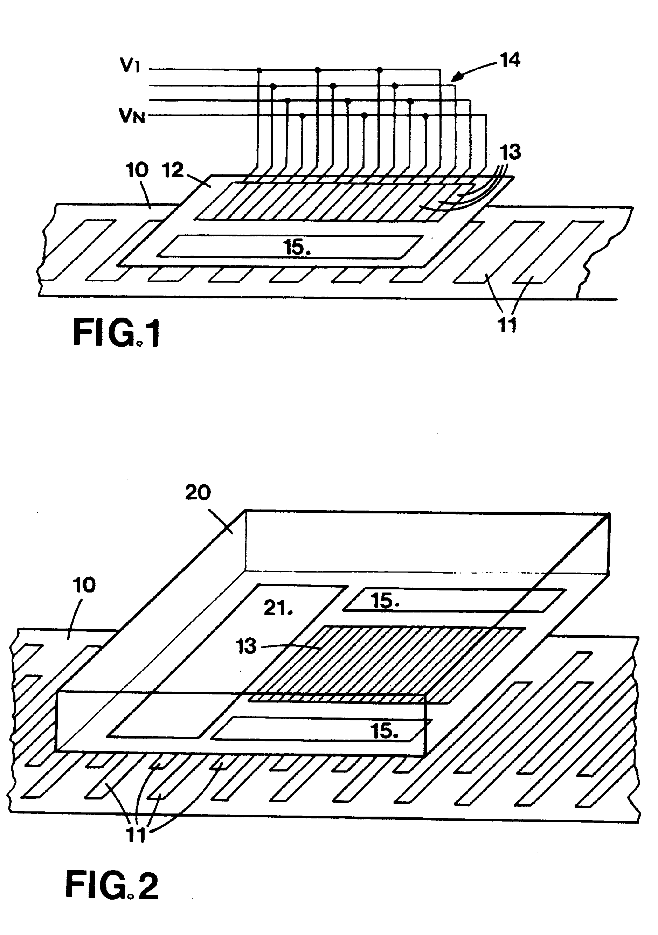

Le capteur capacitif de position connu, illustré à la figure 1, est de type incrémental et possède en général deux surfaces d'électrodes en regard l'une de l'autre. Une des surfaces sert de règle 10, l'autre de curseur 12. Les deux surfaces comportent chacune des électrodes 11,13. La position relative de la règle 10 et du curseur 12 est déterminée par des moyens électroniques comme décrit par exemple dans le brevet suisse No 651.136. Les électrodes du curseur 12 peuvent par exemple être reliées à des signaux de commande et le signal capté par les électrodes de la règle 10 peut être lu capacitivement par une électrode collectrice 15 située sur le curseur 12; cet arrangement a l'avantage de ne pas nécessiter de connexions entre curseur et règle.

En général, les électrodes sont arrangées linéai- rement avec un pas donné, le pas étant N fois plus petit pour les électrodes du curseur que pour celles de la règle. Les électrodes du curseur sont reliées à N signaux de commande VI-VN, chaque Nième électrode du curseur étant reliée au même signal de commande. Dans cet arrangement, la configuration du champ électrique ne peut être modifiée que par incréments correspondant au pas des électrodes du curseur, ou la moitié du pas s'il s'agit d'un capteurdif- férentiel.

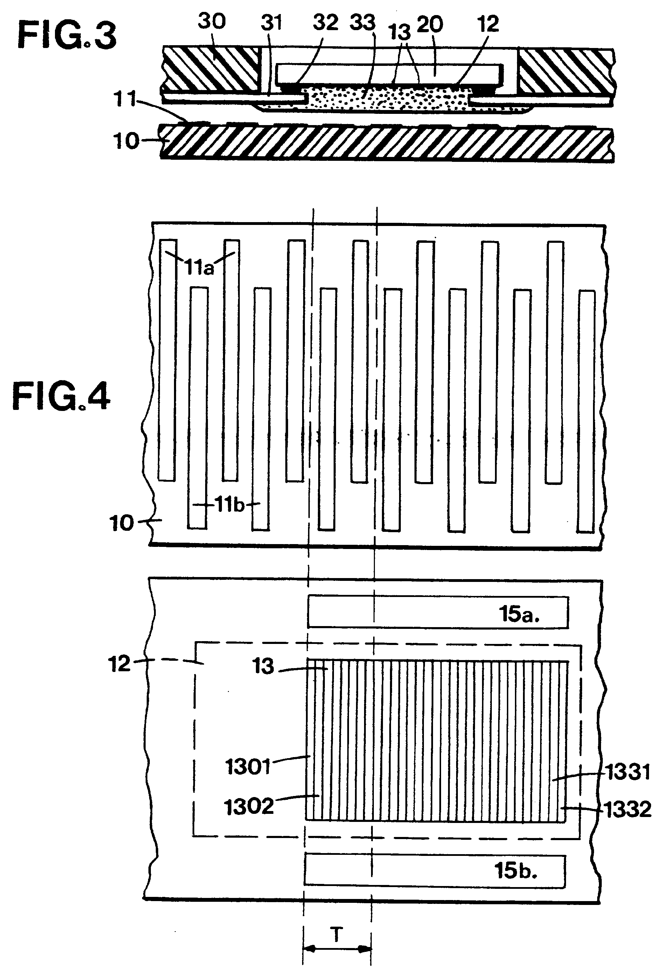

Le nouveau dispositif, illustré aux figures 2 et 3, comprend une règle 10 comportant des électrodes 11 et un circuit intégré 20 se trouvant face à la règle. La surface 12 du circuit intégré 20 qui est en regard de la règle comporte des électrodes 13, une partie électronique 21 incorporant au moins la génération des signaux de commande et les interconnexions aux électrodes 13. Les électrodes 13 sont formées de préférence dans la couche de métallisation du circuit intégré. Les interconnexions devant passer sous cette couche de métallisation, seront formées de préférence par des canaux diffusés dans le semi-conducteur et reliés aux électrodes respectives. Les électrodes collectrices 15 peuvent être soit sur le circuit intégré, comme dans la figure 2, soit à l'extérieur de celui-ci, étant donné que leur géométrie n'est pas critique et qu'il n'y a pas de problème d'inter-connexion.

Comme les électrodes 11 sont adressables individuellement, on peut modifier la configuration du champ électrique par des incréments bien plus fins que le pas des électrodes du curseur.

Si le capteur est abrité des influences extérieures pouvant perturber le bon fontionnement du circuit intégré (lumière, humidité, poussières), il est possible de se passer d'une couche de protection, autre que celle de passivation sur le circuit intégré, et de faire sortir les connexions externes (bonding) là ou la règle ne se trouve pas; ceci implique qu'une partie au moins de la surface 12 du circuit intégré ne soit pas en regard de la règle, afin de laisser un espace libre pour les connexions externes, ou alors que ces connexions externes (bonding) sortent pratiquement tangentiellement à la surface du circuit intégré.

La figure 3 montre une solution utilisant la technique d'assemblage TAB (Tape Automated Bonding) : le circuit intégré 20 comporte des contacts surélevés 32 reliés à un circuit souple 31 qui est fixé au corps du curseur 30. Une couche de résine synthétique 33 protège la surface du circuit intégré. La faible hauteur des contacts et de la couche de protection assure un couplage suffisant entre les électrodes 11 de la règle 10 et celles 13 du circuit intégré 20.

Pour atteindre une résolution digitale élevée, permettant de ne pas avoir recours à une interpolation analogique, on peut utiliser l'arrangement d'électrodes montré à la figure 4. Il est prévu une périodicité T, donnée par un groupe de deux électrodes 11a et 11b b de la règle 10. Sur cette même période T il y a un groupe de huit électrodes du curseur 12, par exemple les électrodes 1301 à 1308. Il est clair que les électrodes de la règle 10 et du curseur 12, montrées ici côte à côte, sont en réalité superposées, comme le montre la figure 2. Si l'on génère sur les 32 électrodes 1301 à 1332 (4 groupes de 8 électrodes) une configuration du champ électrique approximativement périodique, de période T, les signaux couplés sur les électrodes paires 11a et impaires 11 b de la règle seront en opposition de phase; les électrodes paires et impaires sont latéralement décalées les unes par rapport aux autres, ce qui permet de lire les électrodes paires 11a de la règle avec une électrode collectrice 15b du curseur, les électrodes impaires 11b avec l'autre électrode collectrice 15a. On a donc un arrangement différentiel, mais la description qui suit est également valable pour un arrangement non différentiel, ne comportant qu'une électrode 11 par pas de T, et une seule électrode collectrice 15, à la différence près que la résolution possible sans interpolation sera, pour une même configuration des électrodes 13 du curseur, deux fois moins élevée pour un système non différentiel. La raison en est que, dans un arrangement non différentiel, le signal capté ne vient que de la moitié des électrodes 13 du curseur.

Il faut relever que le nombre de huit électrodes 13 par pas est faible et ne sert qu'à illustrer le principe de fonctionnement. En effet, les méthodes de fabrication des circuits intégrés permettent un très faible pas des électrodes 13, ce qui n'est pas le cas pour le pas T des électrodes de la règle, étant donné que le champ engendré par une configuration électrique de période T (un groupe d'electrodes) décroît pratiquement exponentiellement avec l'éloignement de la surface : pour une augmentation de 0,11 x T, le champ diminue de moitié. Ceci implique que pour une séparation entre la règle et le curseur de l'ordre de 0,1 mm, le pas T sera de l'ordre de 1 mm; par contre, il est sans autre possible d'avoir 100 électrodes ou plus par millimètre sur le circuit intégré.

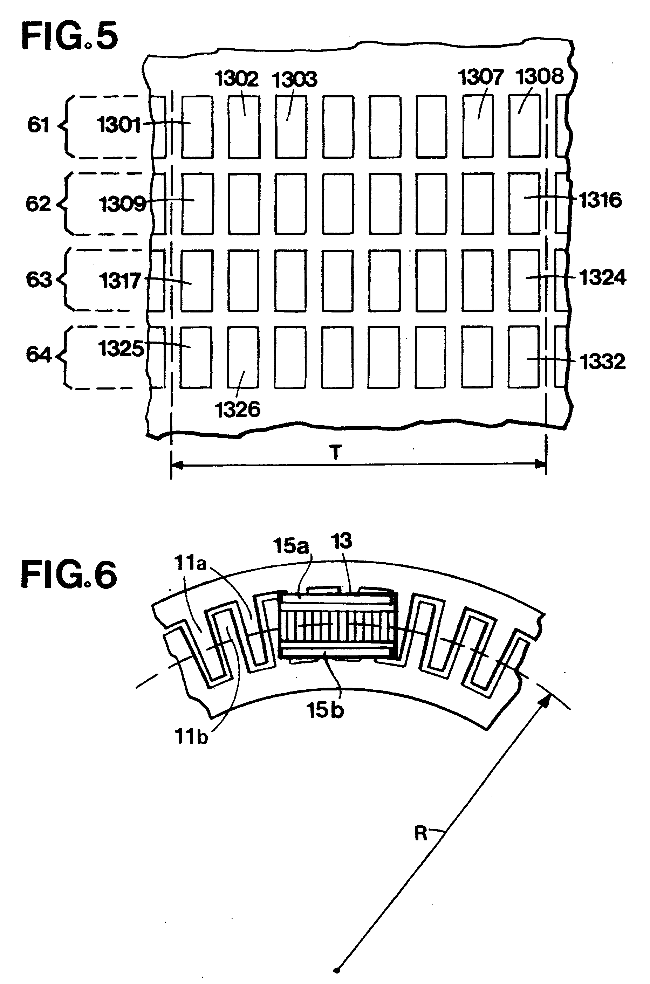

La figure 5 montre une autre disposition des électrodes, dans laquelle les groupes de huit électrodes sont arrangés par rangées 61-64 juxtaposées dans le même intervalle T. Chaque rangée est parallèle à l'axe de déplacement. Le nombre de groupes ou de rangées possible peut être très élevé.

Cette disposition permet une plus grande précision de mesure, car il se produit une compensation des tolérances de fabrication. De plus, elle ouvre des possibilités supplémentaires pour l'application des potentiels d'excitation des électrodes.

Il est également possible de réaliser un codeur rotatif avec le même circuit intégré, donc le même arrangement d'électrodes que celui utilisé pour un capteur linéaire, pour autant que le rayon moyen R soit bien supérieur aux dimensions de l'arrangement d'électrodes, afin de limiter les influences du non-alignement des électrodes de la règle avec celles du circuit intégré du curseur, ainsi que le montre la figure 6 où l'on voit aussi la surface couverte par les électrodes 13, 15a, 15b. Une adaptation de l'arrangement des électrodes du circuit intégré au cas particulier est aussi envisageable.

En variante, les électrodes de la règle pourraient se trouver sur une surface cylindrique, tant que la courbure n'est pas trop forte par rapport à la longueur dans le sens de la mesure de l'arrangement d'électrodes du circuit intégré.

Il est évident que les dimensions du capteur permettent la conception de systèmes à plusieurs capteurs. Une application serait un codeur rotatif avec au moins deux circuits intégrés répartis sur la périphérie, afin d'arriver à une meilleure précision en combinant les résultats de chaque circuit. Une autre application consisterait à réaliser un système absolu en combinant deux capteurs ayant des règles au pas légèrement différent, mais avec des circuits intégrés identiques, pour des raisons de coût. La différence entre les valeurs d'interpolation des deux circuits donnerait la position grossière, une des valeurs d'interpolation la position fine; en combinant les deux, on obtiendrait la position absolue.

## Revendications

1. Capteur capacitif de la position relative entre deux supports (10 et 30) dont un est déplaçable le long de l'autre, un support (10) comportant une série d'électrodes (11), le second support (30) comportant une pluralité d'électrodes (13) au nombre supérieur à 4 et une partie électronique permettant d'appliquer des potentiels incrémentaux à ces dernières électrodes (13), les électrodes (11) d'un support étant en regard de celles (13) de l'autre support, caractérisé en ce qu'au moins une partie des électrodes (13) du second support (30) et au moins une partie de l'électronique se trouvent sur un circuit intégré monolithique (20) commun situé en face des électrodes (11) de l'autre support (10), la partie de l'électronique se trouvant sur le circuit intégré monolithique (20) étant reliée à chaque électrode (13) se trouvant sur ce circuit intégré monolithique (20) et générant des signaux différents pour chacune de ces électrodes (13).

2. Dispositif selon la revendication 1, caractérisé en ce que la surface du circuit intégré (20) faisant face à l'autre support (10) est protégée des influences externes par au moins une couche de protection isolante (33).

3. Dispositif selon la revendication 2, caractérisé en ce que le montage du circuit intégré (20) est fait en technologie T.A.B., qui consiste à relier le circuit intégré (20) aux conducteurs d'un circuit souple (31), le tout étant monté sur la surface du support (30) qui se trouve en regard de l'autre support (10).

4. Dispositif selon la revendication 1, caractérisé en ce que les électrodes (13) se trouvant sur le circuit intégré (20) sont de forme rectangulaire allongée et perpendiculaire à l'axe de déplacement relatif entre les supports (10 et 30) et sont disposés en série le long de l'axe du déplacement.

5. Dispositif selon la revendication 1, caractérisé en ce que les électrodes forment plusieurs rangées juxtaposées (61-64), chaque rangée étant parallèle à l'axe de déplacement.

6. Dispositif selon la revendication 4 ou 5, caractérisé en ce que l'électronique génère sur les électrodes (13) une configuration électrique approximativement périodique formée d'au moins deux tensions différentes, laquelles configuration peut se déplacer en la modifiant électrode (13) par électrode (13).

7. Dispositif selon la revendication 1, caractérisé en ce que les électrodes (11a a et 11 b) d'un support se trouvent sur un corps de rotation de rayon bien supérieur aux dimensions des électrodes (13) de l'autre support, ces dernières (13) restant planes et parallèles entre elles.

## Patentansprüche

1. Kapazitiver Messfühler der Relativlage zweier Träger (10 und 30), deren einer längs des anderen vestellbar ist, wobei ein Träger (10) eine Reihe von Elektroden (11) aufweist, wobei der zweite Träger (30) eine Mehrzahl grösser als 4 von Elektroden (13) und einen an diese letzteren Elektroden (13) inkrementale Potentiale anzulegen erlaubenden elektronischen Teil aufweist, und wobei die Elektroden (11) des einen Trägers denjenigen (13) des anderen Trägers gegenüberliegen, dadurch gekennzeichnet, dass sich wenigstens ein Teil der Elektroden (13) des zweiten Trägers (30) und wenigstens ein Teil der Elektronik auf einer gemeinsamen, den Elektroden (11) des anderen Trägers (10) gegenüber angeordneten monolitischen integrierten Schaltung (20) befinden, und dass der sich auf der monolitischen integrierten Schaltung (20) befindende elektronische Teil mit jeder sich auf der integrierten Schaltung (20) befindenden Elektrode (13) verbunden ist und unterschiedliche Signale für jede dieser Elektroden (13) erzeugt.

2. Kapazitiver Messfühler nach Anspruch 1, dadurch gekennzeichnet, dass die Oberfläche der dem anderen Träger (10) gegenüberliegenden integrierten Schaltung (20) gegen äussere Einflüsse durch mindestens eine isolierende Schutzschicht (33) geschützt ist.

3. Kapazitiver Messfühler nach Anspruch 2, dadurch gekennzeichet, dass der Zusammenbau der intergrierten Schaltung (20) mit T.A.B.-Technologie durchgeführt ist, die darin besteht, die integrierte Schaltung (20) mit den Leitern einer biegsamen Schaltung (31) zu verbinden, wobei das Ganze auf der dem anderen Träger (10) gegenüberliegenden Oberfläche des Trägers (30) zusammengebaut ist.

4. Kapazitiver Messfühler nach Anspruch 1, dadurch gekennzeichnet, dass die sich auf der integrierten Schaltung (20) befindenden Elektroden (13) von rechtwinklig länglicher Form sind und senkrecht zu der Achse der Relativverstellung der Träger (10 und 30) und in Reihe längs der Achse der Verstellung angeordnet sind.

5. Kapazitiver Messfühler nach Anspruch 1, dadurch gekennzeichnet, dass die Elektroden mehrere nebeneinanderliegende Reihen (61-64) bilden, wobei jede Reihe der Achse der Verstellung parallel ist.

6. Kapazitiver Messfühler nach Anspruch 4 oder 5, dadurch gekennzeichnet, dass die Elektronik auf den Elektroden (13) eine angenähert periodische elektrische Konfiguration erzeugt, die von wenigstens zwei unterschiedlichen Spannungen gebildet wird und die sich verstellen kann, indem man sie von Elektrode (13) zu Elektrode (13) ändert.

7. Kapazitiver Messfühler nach Anspruch 1, dadurch gekennzeichnet, dass die Elektroden (11a und 11b) eines Trägers sich auf einem Rotationskörper befinden, dessen Radius viel grösser als die Abmessungen der Elektroden (13) des anderen Trägers sind, wobei die letzteren Elektroden (13) plan und parallel zu einander bleiben.

## Claims

1. Capacitative sensor for sensing the relative positioning of two supports (10 and 30) one of which is displa-ceable along the other, one support (10) comprising a series of electrodes (11), the second support (30) comprising a plurality of electrodes (13) of a number greater than 4 and an electronic part allowing the application of incremental potentials to the latter electrodes (13), the electrodes (11) of one support being opposite those of the other support, characterised in that at least a portion of the electrodes (13) of the second support (30) and at least a portion of the electronics are on a common monolithic integrated circuit (20) situated facing the electrodes (11) of the other support (10), the portion of the electronics on the integrated circuit (20) being connected to each electrode (13) on this monolithic integrated circuit (20) and generating different signals for each of these electrodes (13).

2. Apparatus according to claim 1, characterised in that the surface of the integrated circuit (20) facing the other support (10) is protected from external influences by at least one insulating layer of protection (33).

3. Apparatus according to claim 2, characterised in that the connection of the integrated circuit (20) is made by T.A.B. technology which consists of connecting the integrated circuit (20) to the con- ducters of a flexible circuit (31), the whole being mounted on the surface of the support (30) which is opposite the other support (10).

4. Apparatus according to claim 1, characterised in that the electrodes (13) on the integrated circuit (20) are of elongated rectangular form and per- pendicularto the axis of relative displacement between the supports (10 and 30) and are disposed in series along the axis of displacement.

5. Apparatus according to claim 1, characterised in that the electrodes form several juxtaposed rows (61-64), each row being parallel to the axis of displacement.

6. Apparatus according to claim 4 or 5, characterised in that the electronics generate on the electrodes (13) an approximately periodical electrical configuration formed of at least two different voltages, which configuration can be changed by modifying it electrode (13) by electrode (13).

7. Apparatus according to claim 1, characterised in that the electrodes (11a and 11 b) of one support are on a body of rotation of radius well above the dimensions of electrodes (13) of the other support, the latter (13) lying flat and parallel between them.
